# EUROPÄISCHE PATENTSCHRIFT

(11) **EP 2 467 283 B1**
(45) Veröffentlichungstag und Bekanntmachung des Hinweises auf die Patenterteilung: **10.09.2014**
(21) Anmeldenummer: 10728716.1
(22) Anmeldetag: 08.07.2010
(51) Int. Cl.: B60S 1/08

(54) **SCHEIBENWISCHVORRICHTUNG**
WINDSHIELD WIPER UNIT
DISPOSITIF D'ESSUIE-GLACE

(30) Priorität: 19.08.2009 DE 102009037922; 25.11.2009 DE 102009045183
(43) Veröffentlichungstag der Anmeldung: 27.06.2012
(73) Patentinhaber: Robert Bosch GmbH, 70442 Stuttgart (DE)
(72) Erfinder: MAIER, Gerald, 77833 Ottersweier-Unzhurst (DE); WEGNER, Norbert, 77815 Buehl (DE); RAPP, Juergen, 77886 Lauf (DE); MAY, Michael, 77654 Offenburg (DE)
(86) Internationale Anmeldenummer: PCT/EP2010/059777
(87) Internationale Veröffentlichungsnummer: WO 2011/020649

(56) Entgegenhaltungen:
- DE-A1- 10 144 985
- DE-A1-102006 061 679
- DE-A1-102007 022 213

## Beschreibung

Die Erfindung betrifft eine Scheibenwischvorrichtung gemäß dem Oberbegriff des Patentanspruchs 1.

### Stand der Technik

Zur Steuerung von Scheibenwischvorrichtungen sind zahlreiche Verfahren bekannt. Die DE 101 44 985 A1 beschreibt ein Verfahren zur Steuerung einer Scheibenwischvörrichtung mittels einer Antriebseinrichtung und eines Getriebes mit einem von der Stellung des Getriebes abhängigen Übersetzungsverhältnis, bei dem das von der Antriebseinrichtung über eine Antriebswelle abgegebene Drehmoment zu jedem Zeitpunkt unter Berücksichtigung des Übersetzungsverhältnisses bestimmt wird. Dabei folgt das maximal abgegebene Drehmoment grob einem maximal benötigten Drehmoment. Die Reduktion des abgegebenen Drehmoments erfolgt durch eine Begrenzung eines elektrischen Stroms. Es ist auch bekannt, das von der Antriebseinrichtung abgegebene Drehmoment für bestimmte Stellungen der Scheibenwischvorrichtung durch eine Reduzierung der Versorgungsspannung zu begrenzen. Die Anwendbarkeit dieses Verfahrens ist dadurch beschränkt, dass die Versorgungsspannung lediglich auf rund 50 % ihres Maximalwerts abgesenkt werden kann und eine Reduzierung der Versorgungsspannung eine reduzierte Drehgeschwindigkeit und damit eine reduzierte Dynamik der Antriebseinrichtung mit sich bringt. Es existieren auch einfachere Verfahren, bei denen die Geschwindigkeit der Antriebseinrichtung im Bereich der Umkehrlagen reduziert wird.

Die DE 10 2006 061 679 A1 beschreibt ein Verfahren zum Ansteuern einer Wischanlage bei dem eine Wischhäufigkeit eines Wischerarms reduziert wird, falls ein am Wischarm wirkendes Lastmoment eine vorgegebene Lastschwelle überschreitet. Die DE 10 2007 022 213 A1 beschreibt ein Verfahren zum Betreiben eines Elektromotors, bei dem der Elektromotor in Abhängigkeit einer Temperatur des Motors so angesteuert wird, dass der Motor ein konstantes Drehmoment abgibt und ein maximaler Motorstrom nicht überschritten wird.

### Offenbarung der Erfindung

Aufgabe der vorliegenden Erfindung ist es, eine verbesserte Scheibenwischvorrichtung bereitzustellen. Diese Aufgabe wird durch eine Scheibenwischvorrichtung mit den Merkmalen des Anspruchs 1 gelöst.

Eine erfindungsgemäße Scheibenwischvorrichtung weist ein Antriebsmittel und ein Steuergerät für das Antriebsmittel auf. Dabei ist ein Betriebskennfeld vorgesehen, in dem ein von dem Antriebsmittel abzugebendes maximales Drehmoment und eine minimale Drehzahl des Antriebsmittels hinterlegt sind. Vorteilhafterweise kann das Steuergerät dann eine Einhaltung des maximal abzugebenden Drehmoments und der minimalen Drehzahl des Antriebsmittels überwachen und im Fall einer Überschreitung des maximal abzugebenden Drehmoments geeignet reagieren, beispielsweise durch sofortiges Abschalten der Scheibenwischvorrichtung oder durch einen Wechsel der Drehrichtung des Antriebsmittels. Vorteilhafterweise werden dadurch ungewollte Betriebs- und Belastungszustände vermieden. Beim Einsatz von Kurbelgetrieben durch den Kniehebeleffekt theoretisch mögliche unendlich hohe Kräfte können nicht mehr auftreten. Dadurch sinkt die mechanische Belastung von Stangen, Lagern, Kurbelplatten, Befestigungspunkten und anderen mechanischen Bauteilen der Scheibenwischvorrichtung. In der Folge wird die Verwendung dünnerer Wandstärken, kürzerer Lagerstellen, verkleinerter Drehgelenke und alternativer Wertstoffe mit geringerer Festigkeit ermöglicht. Dadurch lassen sich Gewicht, Bauraum und Kosten in hohem Umfang einsparen. Dies erlaubt den Einsatz der erfindungsgemäßen Scheibenwischvorrichtung auch in engen und zerklüfteten Kraftfahrzeugumgebungen. Durch das reduzierte Gewicht sinkt außerdem die mittlere Stromaufnahme der Scheibenwischvorrichtung, was einen direkten Beitrag zur Reduzierung des Schadstoffausstoßes des Kraftfahrzeugs liefert.

Erfindungsgemäß sind im Betriebskennfeld für unterschiedliche Winkelstellungen einer Welle des Antriebsmittels jeweils ein von dem Antriebsmittel abzugebendes maximales Drehmoment und eine minimale Drehzahl des Antriebsmittels hinterlegt. Vorteilhafterweise können dadurch in unterschiedlichen Stellungen der Scheibenwischvorrichtung benötigte unterschiedliche Drehmomente und Drehzahlenberücksichtigt werden.

In einer Weiterbildung ist im Betriebskennfeld für unterschiedliche Winkelstellungen einer Welle des Antriebsmittels zusätzlich jeweils ein weiterer Drehmoment-Grenzwert hinterlegt. Vorteilhafterweise kann das Steuergerät dann bei einer Überschreitung des maximalen Drehmoments versuchen, das Drehmoment durch eine Reduzierung der Drehzahl zu reduzieren, und erst, wenn auch der zweite Drehmoment-Grenzwert überschritten wird, das Antriebsmittel komplett abschalten.

In einer Weiterbildung der Scheibenwischvorrichtung ist dem Antriebsmittel ein Getriebe nachgeordnet, das eine Bewegung des Antriebsmittels auf eine Wischerwelle vermittelt, wobei das Getriebe ein Übersetzungsverhältnis aufweist, das von der Winkelstellung der Welle des Antriebsmittels abhängt. Vorteilhafterweise kann das Betriebskennfeld die Winkelabhängigkeit des Übersetzungsverhältnisses berücksichtigen.

Zweckmäßigerweise ist das Antriebsmittel durch ein pulsweitenmoduliertes Spannungssignal ansteuerbar und das Steuergerät dazu ausgebildet, ein Tastverhältnis des pulsweitenmodulierten Spannungssignals derart zu regeln, dass sich eine im Betriebskennfeld hinterlegte minimale Drehzahl des Antriebsmittels einstellt und ein von dem Antriebsmittel abgegebenes Drehmoment ein im Betriebskennfeld hinterlegtes maximales Drehmoment nicht übersteigt. Vorteilhafterweise kann dadurch sichergestellt werden, dass die Scheibenwischvorrichtung nur innerhalb eines erlaubten Parameterbereichs betrieben wird.

Bevorzugt ist eine Vorrichtung zum Bestimmen einer Drehzahl des Antriebsmittels vorgesehen. Dabei ist das Steuergerät ausgebildet, anhand der Drehzahl des Antriebsmittels und des Tastverhältnisses des pulsweitenmodulierten Spannungssignals das von dem Antriebsmittel abgegebene Drehmoment zu ermitteln. Vorteilhafterweise können dadurch Störungen der Scheibenwischvorrichtung erkannt werden.

Besonders bevorzugt ist das Steuergerät ausgebildet, das Antriebsmittel abzuschalten oder eine Antriebsrichtung des Antriebsmittels umzukehren, falls das von dem Antriebsmittel abgegebene Drehmoment das im Betriebskennfeld vorgesehene maximale Drehmoment übersteigt. Vorteilhafterweise kann dadurch eine Beschädigung der Scheibenwischvorrichtung verhindert werden.

Die Erfindung wird nun anhand der beigefügten Figuren näher erläutert. Dabei werden für gleiche oder gleich wirkende Elemente einheitliche Bezugszeichen verwendet. Es zeigen:
Figur 1 ein schematisches Blockschaltbild einer Scheibenwischvorrichtung;
Figur 2 eine weitere Ansicht der Scheibenwischvorrichtung;
Figur 3 ein Betriebskennfeld einer Scheibenwischvorrichtung; und
Figur 4 eine Regelcharakteristik eines Antriebsmittels der Scheibenwischvorrichtung.

### Ausführungsformen der Erfindung

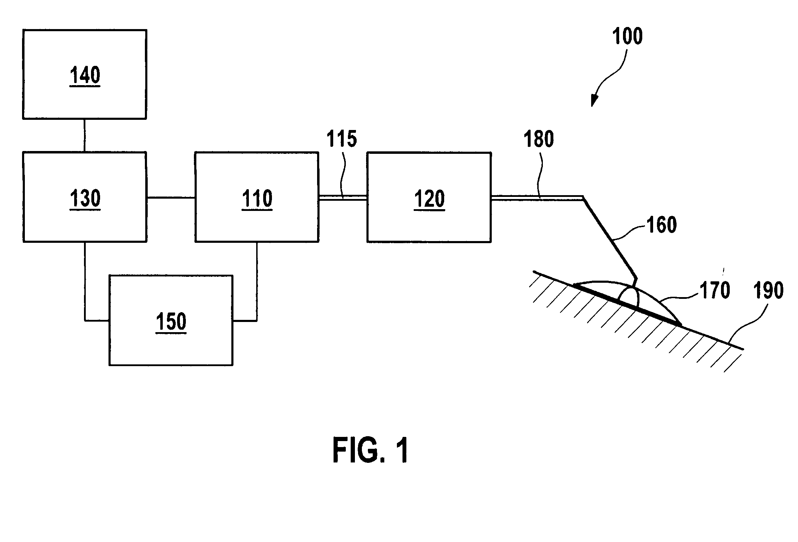

Figur 1 zeigt eine Scheibenwischvorrichtung 100 in schematisierter Darstellung. Die Scheibenwischvorrichtung 100 weist einen Wischerarm 160 auf, an dem ein Wischblatt 170 befestigt ist, das zum Wischen einer Scheibe 190 dient. Die Scheibe 190 kann beispielsweise eine Scheibe eines Kraftfahrzeugs sein. Der Wischerarm 160 kann über eine Wischerwelle 180 in eine schwenkende Bewegung versetzt werden. Ein Antriebsmittel 110 bringt hierzu eine Antriebswelle 115 in eine Drehbewegung, die über ein Getriebe 120 auf die Wischerwelle 180 übertragen wird. Das Antriebsmittel 110 kann ein Elektromotor, beispielsweise ein reversierender Elektromotor, sein. Das Getriebe 120 kann beispielsweise ein Kurbelgetriebe sein. In diesem Fall weist das Getriebe 120 ein Übersetzungsverhältnis auf, das von einer Winkelstellung der Antriebswelle 115 abhängt. Das Getriebe 120 und der Wischerarm 160 weisen außerdem eine Elastizität auf, die ebenfalls von der Winkelstellung der Antriebswelle 115 abhängen kann.

Das Antriebsmittel 110 wird mit einem pulsweitenmodulierten Spannungssignal angesteuert. Das Tastverhältnis des pulsweitenmodulierten Spannungssignals legt dabei einen effektiven Spannungswert fest und bestimmt dadurch die Winkelgeschwindigkeit, mit der das Antriebsmittel 110 die Antriebswelle 115 antreibt. Die Ansteuerung des Antriebsmittels 110 erfolgt durch ein Steuergerät 130. Das Steuergerät 130 kann beispielsweise als Mikrocontroller oder Mikrocomputer ausgebildet sein. Das Steuergerät 130 kann auch mit einem anderen Steuergerät eines Kraftfahrzeugs integriert sein. Das Steuergerät 130 hat Zugriff auf ein Betriebskennfeld 140. Das Betriebskennfeld 140 kann beispielsweise als Wertetabelle in einem nichtflüchtigen Datenspeicher ausgebildet sein. Das Betriebskennfeld 140 kann auch im Steuergerät 130 integriert sein. Außerdem ist das Steuergerät 130 mit einem Drehzahlmesser 150 verbunden, der dazu ausgebildet ist, eine Anzahl von Umdrehungen oder eine Drehzahl des Antriebsmittels 110 bzw. der Antriebswelle 115 zu ermitteln. Der Drehzahlmesser 150 kann auch als Ortssensor ausgebildet sein, der eine Ortsänderung der Antriebswelle 115 ermittelt.

Im Betriebskennfeld 140 ist ein maximales vom Antriebsmittel 110 abzugebendes Drehmoment hinterlegt. Bevorzugt ist das vom Antriebsmittel 110 abzugebende maximale Drehmoment im Betriebskennfeld 140 abhängig von einer Winkelstellung des Antriebsmittels 110 bzw. der Antriebswelle 115 hinterlegt. Das Steuergerät 130 steuert das Antriebsmittel 110 derart an, dass das im Betriebskennfeld 140 hinterlegte maximale Drehmoment nicht überschritten wird. Kommt es zu einem Betriebsfall, bei dem das vom Antriebsmittel 110 abgegebene Drehmoment das im Betriebskennfeld 140 vorgesehene maximale Drehmoment überschreiten würde, so kann das Steuergerät 130 in festgelegter Form darauf reagieren. Beispielsweise kann das Steuergerät 130 das Antriebsmittel 110 abschalten oder eine Drehrichtung des Antriebsmittels 110 umkehren.

Das Betriebskennfeld 140 kann auch für jede Winkelstellung des Antriebsmittels 110 bzw. der Antriebswelle 115 zwei Drehmomentgrenzwerte vorhalten. Kommt es zu einer Überschreitung des ersten Drehmomentgrenzwerts, so versucht das Steuergerät 130, das abgegebene Drehmoment zu reduzieren. Wird dennoch auch der zweite Grenzwert überschritten, so schaltet das Steuergerät 130 das Antriebsmittel 110 ab. Nachfolgend wird erläutert, wie die im Betriebskennfeld 140 hinterlegten Drehmomentgrenzwerte festgelegt werden können.

Das Betriebskennfeld 140 kann auch für jede Winkelstellung des Antriebsmittels 110 bzw. der Antriebswelle 115 eine gewünschte Drehzahl des Antriebsmittels 110 vorhalten. Die gewünschte Drehzahl kann für alle Winkelstellungen des Antriebsmittels 110 bzw. der Antriebswelle 115 gleich sein oder von der Winkelstellungen des Antriebsmittels 110 bzw. der Antriebswelle 115 abhängen. Das Steuergerät 130 steuert das Antriebsmittel 110 dann derart an, dass sich die jeweilige gewünschte Drehzahl einstellt.

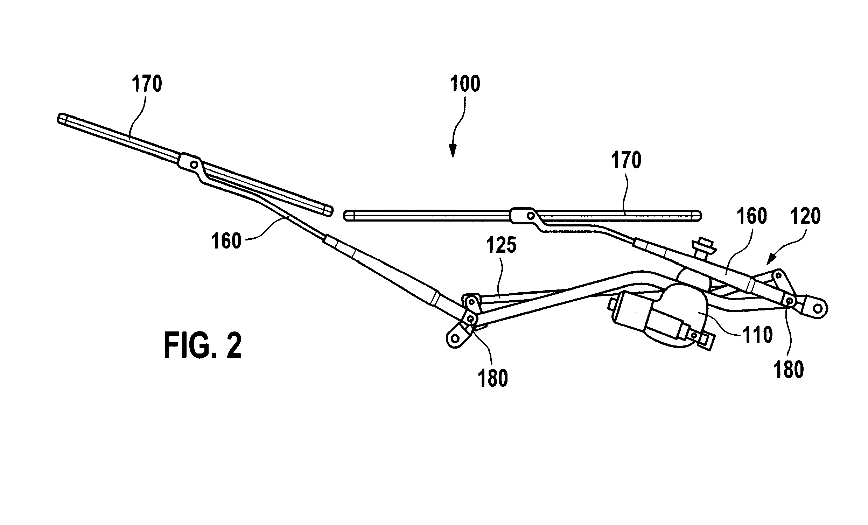

Figur 2 zeigt eine weitere exemplarische Ansicht der Scheibenwischvorrichtung 100. Insbesondere zeigt Figur 2, dass das Getriebe 120 eine Getriebestange 125 aufweist.

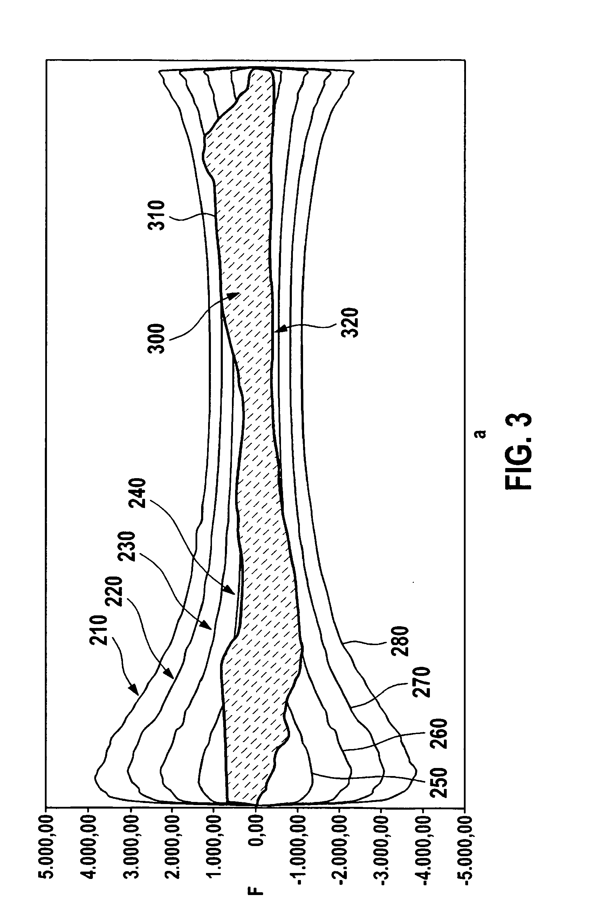

Figur 3 zeigt in schematischer Darstellung einen Zusammenhang zwischen einem Drehwinkel a des Antriebsmittels 110 bzw. der Antriebswelle 115 und einer von der Gelenkstange 125 des Getriebes 120 ausgeübten Kraft F. Wegen der Winkelabhängigkeit des Übersetzungsverhältnisses des Getriebes 120 ist die von der Gelenkstange 125 des Getriebes 120 ausgeübte Kraft F abhängig vom Winkel a des Antriebsmittels 110 bzw. der Antriebswelle 115. In Figur 3 ist auf der horizontalen Achse der Winkel a der Antriebswelle 115, auf der vertikalen Achse die Stangenkraft F der Gelenkstange 125 des Getriebes 120 aufgetragen. Ein erster Stangenkraftverlauf 210 zeigt die von der Gelenkstange 125 des Getriebes 120 ausgeübte Kraft F für den Fall, dass das Antriebsmittel 110 ein konstantes erstes Drehmoment, beispielsweise 40 Nm, abgibt. Ein zweiter Stangenkraftverlauf 220, ein dritter Stangenkraftverlauf 230, ein vierter Stangenkraftverlauf 240, ein fünfter Stangenkraftverlauf 250, ein sechster Stangenkraftverlauf 260, ein siebter Stangenkraftverlauf 270 und ein achter Stangenkraftverlauf 280 zeigen den vom Winkel a der Antriebswelle 115 abhängigen Verlauf der Stangenkraft F für andere konstante Werte des vom Antriebsmittel 110 abgegebenen Drehmoments. Beispielsweise können der zweite Stangenkraftverlauf 220 einem Drehmoment von 30 Nm, der dritte Stangenkraftverlauf 230 einem Drehmoment von 20 Nm und der vierte Stangenkraftverlauf einem Drehmoment von 10 Nm entsprechen. In allen Fällen ist der Verlauf der Stangenkraft F wegen der Winkelabhängigkeit des Übersetzungsverhältnisses des Getriebes 120 vom Winkel a der Antriebswelle 115 abhängig.

Zum Erzeugen der im Betriebskennfeld 140 hinterlegten Wertetabelle werden in einem ersten Schritt die gewollten Betriebsfälle an der Scheibe 190 des Kraftfahrzeugs definiert. Hierzu gehören beispielsweise die Betriebsmomente an Wischerlagern der Scheibenwischvorrichtung 100, die erforderlich sind, um den Wischerarm 160 und das Wischblatt 170 bei den bei maximaler Fahrgeschwindigkeit des Kraftfahrzeugs auftretenden Windlasten an jedem Ort beziehungsweise jedem Winkel der Wischbewegung des Wischerarms 160 mit den gewünschten Geschwindigkeiten und Beschleunigungen zu betreiben. Außerdem können die gewollten Kräfte oder Kraftänderungen festgelegt werden, die ausgeübt werden sollen, falls das Wischblatt 170 auf ein Hindernis wie beispielsweise einen Schneekeil trifft oder das Wischblatt 170 an der Scheibe 190 festgefroren ist.

Das so gewonnene Betriebskennfeld an der Scheibe 190 kann in einem zweiten Schritt durch geeignete Berechnungsverfahren in ein Betriebskennfeld 300 des Getriebes 120 übersetzt werden, das für jeden Winkel a der Antriebswelle 115 die maximale gewollte Stangenkraft F der Gelenkstange 125 des Getriebes 120 angibt. Bei der Übersetzung des Betriebskennfelds an der Scheibe 190 in das Betriebskennfeld des Getriebes 120 werden die mechanischen Zusammenhänge zwischen dem Getriebe 120 und dem Wischblatt 170 berücksichtigt.

Das entstehende Betriebskennfeld 300 des Getriebes 120 ist in Figur 3 dargestellt. Der schraffierte Bereich des Betriebskennfelds 300 gibt für jeden Winkel a der Antriebswelle 115 zulässige Werte der Stangenkraft F der Gelenkstange 125 des Getriebes 120 an. Die zulässigen Wertebereiche des Betriebskennfelds 300 werden durch eine erste Grenzkurve 310 und durch eine zweite Grenzkurve 320 begrenzt. Die durch die erste Grenzkurve 310 begrenzten positiven Werte der zulässigen Stangenkraft F können bei einer Bewegung des Wischblatts 170 in eine erste Richtung, die durch die zweite Grenzkurve 320 begrenzten negativen Werte der zulässigen Stangenkraft F beim Bewegen des Wischblatts 170 in eine zweite Richtung auftreten.

Wegen der Winkelabhängigkeit des Übersetzungsverhältnisses des Getriebes 120 und der winkelabhängigen Elastizität des Getriebes 120 sind zum Erzeugen der zulässigen Werte der Stangenkraft F auf der ersten Grenzkurve 310 bei unterschiedlichen Winkeln a der Antriebswelle 115 unterschiedlichen vom Antriebsmittel 110 abgegebene Drehmomente notwendig. Das jeweils benötigte Drehmoment des Antriebsmittel 110 kann für jeden Winkel a der Antriebswelle 115 aus dem Schnittpunkt der ersten Grenzkurve 310 mit einem der Stangenkraftverläufe 210, 220, 230, 240, 250, 260, 270, 280 ermittelt werden. Dies gilt entsprechend für die zweite Grenzkurve 220. Aus den Schnittpunkten der Grenzkurven 310, 320 mit den Stangenkraftverläufen 210 bis 280 kann also in einem dritten Schritt für jeden Winkel a der Antriebswelle 115 ein zulässiges maximales positives und negatives Drehmoment des Antriebsmittels 110 ermittelt werden, wodurch das Betriebskennfeld 140 des Antriebsmittels 110 erhältlich ist. Das so erhaltene Betriebskennfeld 140 des Antriebsmittels 110 gibt für jeden Winkel a der Antriebswelle 115 ein maximal zulässiges positives und negatives vom Antriebsmittel 110 abgegebenes Drehmoment an. Das Steuergerät 130 nutzt das Betriebskennfeld 140 zur Steuerung des Antriebsmittels 110. Dies wird nachfolgend erläutert.

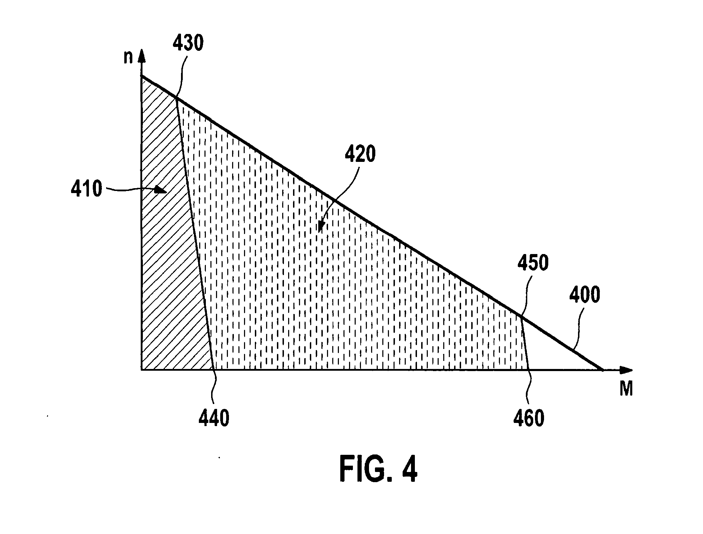

Figur 4 zeigt in schematischer Darstellung einen Graphen, in dem ein Zusammenhang zwischen dem auf der horizontalen Achse aufgetragenen, vom Antriebsmittel 110 abgegebenen Drehmoment M und der auf der vertikalen Achse aufgetragenen Drehzahl n des Antriebsmittels 110 gezeigt ist. Zwischen beiden Größen besteht ein indirekt proportionaler linearer Zusammenhang, der durch den Aufbau des Antriebsmittels 110 festgelegt und durch eine Kennlinie 400 dargestellt ist. In unbelastetem Zustand läuft das Antriebsmittel 110 mit einer maximalen Drehzahl n, die dem Schnittpunkt der Kennlinie 400 mit der vertikalen Achse des Graphen der Figur 4 entspricht. Im Blockadefall gibt das Antriebsmittel überhaupt keine Drehbewegung mehr ab, übt jedoch ein maximales Drehmoment M aus, das dem Schnittpunkt der Kennlinie 400 mit der horizontalen Achse entspricht.

Die Lage der Kennlinie 400 im Diagramm der Figur 4 wird durch das Tastverhältnis des pulsweitenmodulierten Spannungssignals bestimmt, mit dem das Steuergerät 130 das Antriebsmittel 110 ansteuert. Eine Variation des Tastverhältnisses führt zu einer parallelen Verschiebung der Kennlinie 400, bei der die Steigung der Kennlinie 400 unverändert bleibt.

Das Steuergerät 130 versucht, das Tastverhältnis des pulsweitenmodulierten Spannungssignals so einzuregeln, dass die mit Hilfe des Drehzahlmessers 150 ermittelte tatsächliche Drehzahl des Antriebsmittels 110 einer vorgegebenen gewünschten Drehzahl entspricht. Die vorgegebene gewünschte Drehzahl kann dabei konstant oder vom Winkel a der Antriebswelle 115 abhängig sein. In letzterem Fall kann das Steuergerät 130 die gewünschte Drehzahl dem Betriebskennfeld 140 entnehmen.

Aus dem durch den Regelkreis aufgefundenen Tastverhältnis, der ermittelten Drehzahl des Antriebsmittels 110 und einer Kenntnis der Kennlinie 400 des Antriebsmittels 110 kann das Steuergerät 130 das vom Antriebsmittel 110 tatsächlich abgegebene Drehmoment bestimmen. Das Steuergerät 130 vergleicht dieses tatsächliche Drehmoment mit dem durch das Betriebskennfeld 140 festgelegten zulässigen Bereich des Drehmoments für den aktuellen Winkel a der Antriebswelle 115. Stellt das Steuergerät 130 fest, dass der zulässige Bereich überschritten wurde, so ergreift es geeignete Massnahmen.

Entspricht das im Betriebskennfeld 140 festgelegte maximale vom Antriebsmittel 110 abgegebene Drehmoment beispielsweise dem zweiten Punkt 440 im Diagramm der Figur 4, so sind alle Betriebspunkte innerhalb des ersten Betriebsbereichs 410 zulässig. Erreicht der Betriebspunkt des Antriebsmittels 110 die Drehzahl n und das Drehmoment M, die dem ersten Punkt 430 in Figur 4 entsprechen, so wird das vom Antriebsmittel 110 abgegebene Drehmoment M zunächst durch Reduktion der Drehzahl n begrenzt. Anschaulich kann dies so verstanden werden, dass die Kennlinie des Antriebsmittels 110 im ersten Punkt 430 abgeknickt und mit einer Geraden auf das zulässige Drehmoment M im zweiten Punkt 440 begrenzt wird. Das dem ersten Punkt 430 zugehörige Drehmoment kann dabei ebenfalls im Betriebskennfeld 140 hinterlegt sein oder aus dem im Betriebskennfeld 140 hinterlegten maximalen Drehmoment, das dem zweiten Punkt 440 entspricht, errechnet werden.

Entspricht das zulässige vom Antriebsmittel 110 abgegebene Drehmoment M dem Wert am vierten Punkt 460, so sind entsprechend alle Betriebspunkte in einem zweiten Betriebsbereich 420 zulässig. Dabei wird die Kennlinie bei Erreichen eines dritten Punkts 450 abgeknickt und mit einer Geraden auf das Drehmoment des vierten Punkts 460 begrenzt.

Durch dieses Verfahren wird sichergestellt, dass das vom Antriebsmittel 110 abgegebene Drehmoment M die im Betriebskennfeld 140 hinterlegten Werte für keinen Winkel a der Antriebswelle 115 dauerhaft überschreitet. Dadurch kann eine übermäßige Belastung des Getriebes 120, des Wischerarms 160, des Wischblatts 170 und anderer Bauteile der Scheibenwischvorrichtung 100 verhindert werden. In der Folge können die Komponenten der Scheibenwischvorrichtung 100 mit weniger mechanischen Reserven ausgebildet werden, wodurch sich ein geringeres Gewicht, ein geringerer Platzbedarf und geringere Herstellungskosten ergeben.

Im Fall einer Blockade des Wischblatts 170, beispielsweise durch einen Schneekeil auf der Scheibe 190 oder durch ein Festfrieren des Wischblatts 170 auf der Scheibe 190, gelingt es dem Steuergerät 130 nicht, das Tastverhältnis des pulsweitenmodulierten Spannungssignal derart einzuregeln, dass sich die gewünschte Drehzahl n des Antriebsmittels 110 einstellt und das vom Antriebsmittel 110 abgegebene Drehmoment M den im Betriebskennfeld 140 hinterlegten Wert nicht überschreitet. In diesem Fall kann das Steuergerät 130 auf vorherbestimmte Weise reagieren. Beispielsweise kann das Steuergerät 130 das Antriebsmittel 110 abschalten. Alternativ kann das Steuergerät 130 die Drehrichtung des Antriebsmittels 110 umkehren. Das Steuergerät 130 kann auch einen weiteren Versuch durchführen, das Wischblatt 170 mittels des Antriebsmittels 110 über den kritischen Bereich hinweg zu bewegen.

Falls die Scheibenwischvorrichtung 100 mit zwei Wischarmen aufweist, kann, wenn der zulässige Betriebsbereich 410, 420 verlassen wird, aufgrund der winkelabhängigen Elastizität des Getriebes 120 ermittelt werden, welcher der Wischarme blockiert ist.

Zusätzlich zu den im Betriebskennfeld 140 hinterlegten maximal zulässigen Drehmomenten des Antriebsmittels 110 können auch maximal zulässige zeitliche Drehmomentgradienten vorgesehen sein. Die maximal zulässigen Drehmomentgradienten können ebenfalls von der Winkelstellung des Antriebsmittels 110 bzw. der Antriebswelle 115 abhängen. In diesem Fall ermittelt das Steuergerät aus den jeweils gegenwärtigen und vorhergegangenen vom Antriebsmittel 110 abgegebenen Drehmomenten einen Drehmomentgradient und überwacht, dass dieser den im Betriebskennfeld 140 hinterlegten Wert nicht überschreitet.

## Patentansprüche

1. Scheibenwischvorrichtung (100)
mit einem Antriebsmittel (110) und einem Steuergerät (130) für das Antriebsmittel (110),
**dadurch gekennzeichnet, dass**
ein Betriebskennfeld (140) vorgesehen ist, in dem für unterschiedliche Winkelstellungen einer Welle (115) des Antriebsmittels (110) jeweils ein von dem Antriebsmittel (110) abzugebendes maximales Drehmoment und eine minimale Drehzahl des Antriebsmittels (110) hinterlegt sind.

2. Scheibenwischvorrichtung (100) nach Anspruch 1,
**dadurch gekennzeichnet, dass**
im Betriebskennfeld (140) für unterschiedliche Winkelstellungen einer Welle (115) des Antriebsmittels (110) zusätzlich jeweils ein weiterer Drehmoment-Grenzwert hinterlegt ist.

3. Scheibenwischvorrichtung (100) nach einem der Ansprüche 1 oder 2,
**dadurch gekennzeichnet, dass**
dem Antriebsmittel (110) ein Getriebe (120) nachgeordnet ist, das eine Bewegung des Antriebsmittels (110) auf eine Wischerwelle (180) vermittelt, wobei das Getriebe (120) ein Übersetzungsverhältnis aufweist, das von der Winkelstellung der Welle (115) des Antriebsmittels (110) abhängt.

4. Scheibenwischvorrichtung (100) nach einem der vorhergehenden Ansprüche,
**dadurch gekennzeichnet, dass**
das Antriebsmittel (110) durch ein pulsweitenmoduliertes Spannungssignal ansteuerbar ist,
und das Steuergerät (130) dazu ausgebildet ist, ein Tastverhältnis des pulsweitenmodulierten Spannungssignals derart zu regeln, dass sich eine im Betriebskennfeld (140) hinterlegte minimale Drehzahl des Antriebsmittels (110) einstellt und ein von dem Antriebsmittel (110) abgegebenes Drehmoment ein im Betriebskennfeld (140) hinterlegtes maximales Drehmoment nicht übersteigt.

5. Scheibenwischvorrichtung (100) nach einem der vorhergehenden Ansprüche,
**dadurch gekennzeichnet, dass**
eine Vorrichtung (150) zum Bestimmen einer Drehzahl des Antriebsmittels (110) vorgesehen ist,
und das Steuergerät (130) ausgebildet ist, anhand der Drehzahl des Antriebsmittels (110) und des Tastverhältnisses des pulsweitenmodulierten Spannungssignals das von dem Antriebsmittel (110) abgegebene Drehmoment zu ermitteln.

6. Scheibenwischvorrichtung (100) nach Anspruch 5,
**dadurch gekennzeichnet, dass**
das Steuergerät (130) ausgebildet ist, das Antriebsmittel (110) abzuschalten oder eine Antriebsrichtung des Antriebsmittels (110) umzukehren, falls das von dem Antriebsmittel (110) abgegebene Drehmoment das im Betriebskennfeld (140) vorgesehene maximale Drehmoment übersteigt.

## Claims

1. Windshield wiper device (100) with a driving means (110) and a control unit (130) for the driving means (110), **characterized in that** an operating map (140) is provided, in which a maximum torque to be output by the driving means (110) and a minimum rotational speed of the driving means (110) are in each case stored for different angular positions of a shaft (115) of the driving means (110).

2. Windshield wiper device (100) according to Claim 1, **characterized in that** a further torque limit value is in each case additionally stored in the operating map (140) for different angular positions of a shaft (115) of the driving means (110).

3. Windshield wiper device (100) according to either of Claims 1 and 2, **characterized in that** a transmission (120) which transmits a movement of the driving means (110) to a wiper shaft (180) is arranged downstream of the driving means (110), the transmission (120) having a transmission ratio which depends on the angular position of the shaft (115) of the driving means (110).

4. Windshield wiper device (100) according to one of the preceding claims, **characterized in that** the driving means (110) can be activated by a pulse-width-modulated voltage signal, and the control unit (130) is designed to regulate a pulse-duty factor of the pulse-width-modulated voltage signal in such a manner that a minimum rotational speed of the driving means (110) is set, which minimum rotational speed is stored in the operating map (140), and a torque output by the driving means (110) does not exceed a maximum torque stored in the operating map (140).

5. Windshield wiper device (100) according to one of the preceding claims, **characterized in that** a device (150) is provided for ascertaining a rotational speed of the driving means (110), and the control unit (130) is designed to determine the torque output by the driving means (110) on the basis of the rotational speed of the driving means (110) and of the pulse-duty factor of the pulse-width-modulated voltage signal.

6. Windshield wiper device (100) according to Claim 5, **characterized in that** the control unit (130). is designed to switch the driving means (110) off or to reverse a driving direction of the driving means (110) if the torque output by the driving means (110) exceeds the maximum torque provided in the operating map (140).

## Revendications

1. Dispositif d'essuie-glace (100) comprenant un moyen d'entraînement (110) et un appareil de commande (130) pour le moyen d'entraînement (110), **caractérisé en ce**
**qu'**il est prévu un champ caractéristique de fonctionnement (140) dans lequel, pour différentes positions angulaires d'un arbre (115) du moyen d'entraînement (110), sont consignés à chaque fois un couple maximal à délivrer par le moyen d'entraînement (110) et une vitesse de rotation minimale du moyen d'entraînement (110).

2. Dispositif d'essuie-glace (100) selon la revendication 1,
**caractérisé en ce que**
dans le champ caractéristique de fonctionnement (140), pour différentes positions angulaires d'un arbre (115) du moyen d'entraînement (110), est en outre consignée à chaque fois une valeur limite supplémentaire du couple.

3. Dispositif d'essuie-glace (100) selon l'une quelconque des revendications 1 ou 2,
**caractérisé en ce**
**qu'**une transmission (120) est montée en aval du moyen d'entraînement (110), laquelle permet un déplacement du moyen d'entraînement (110) sur un arbre d'essuie-glace (180), la transmission (120) présentant un rapport de démultiplication qui dépend de la position angulaire de l'arbre (115) du moyen d'entraînement (110).

4. Dispositif d'essuie-glace (100) selon l'une quelconque des revendications précédentes,
**caractérisé en ce que**
le moyen d'entraînement (110) peut être commandé par un signal de tension à modulation de la largeur d'impulsions,
et l'appareil de commande (130) est réalisé de manière à réguler un rapport cyclique du signal de tension à modulation de la largeur d'impulsions, de telle sorte qu'une vitesse de rotation minimale du moyen d'entraînement (110) consignée dans le champ caractéristique de fonctionnement (140) s'établisse et qu'un couple délivré par le moyen d'entraînement (110) ne dépasse pas un couple maximal consigné dans le champ caractéristique de fonctionnement (140).

5. Dispositif d'essuie-glace (100) selon l'une quelconque des revendications précédentes,
**caractérisé en ce**
**qu'**il est prévu un dispositif (150) pour déterminer une vitesse de rotation du moyen d'entraînement (110),
et l'appareil de commande (130) est réalisé de manière à déterminer le couple délivré par le moyen d'entraînement (110) à l'aide de la vitesse de rotation du moyen d'entraînement (110) et du rapport cyclique du signal de tension à modulation de largeur d'impulsions.

6. Dispositif d'essuie-glace (100) selon la revendication 5,
**caractérisé en ce que**
l'appareil de commande (130) est réalisé de manière à déconnecter le moyen d'entraînement (110) ou à inverser un sens d'entraînement du moyen d'entraînement (110) si le couple délivré par le moyen d'entraînement (110) dépasse le couple maximal prévu dans le champ caractéristique de fonctionnement (140).
